Europäisches Patentamt

(19) European Patent Office

Office européen des brevets

(11) Numéro de publication: **0 126 694**
**A1**

(12) **DEMANDE DE BREVET EUROPEEN**

(21) Numéro de dépôt: **84401040.5**

(22) Date de dépôt: **18.05.84**

(51) Int. Cl.³: **B 65 G 57/30**

(30) Priorité: **20.05.83 FR 8308411**

(43) Date de publication de la demande: **28.11.84**
**Bulletin 84/48**

(84) Etats contractants désignés: **CH DE GB IT LI NL**

(71) Demandeur: **Fortea, Michel, Route d'Ecuillé Souiaire et Bourg, F-49460 Montreuil Juigne (FR)**

(72) Inventeur: **Fortea, Michel, Route d'Ecuillé Soulaire et Bourg, F-49460 Montreuil Juigne (FR)**

(74) Mandataire: **Caunet, Jean et al, Cabinet BEAU DE LOMENIE 55, rue d'Amsterdam, F-75008 Paris (FR)**

(54) **Dispositif pour palettiser des charges unitaires.**

㊀ Le dispositif est placé en bout d'une table de préparation (1) de chaque couche (4) à placer sous l'empilage (13). Il comporte une table de chargement (8) et au moins une fourche latérale escamotable (17, 18) située respectivement au niveau de préparation (11) d'une couche et au niveau de base (12) de l'empilage en attente, niveaux qui sont écartés d'une distance au moins égale à la hauteur de chaque couche. La table de chargement (8) est élévatrice entre ces deux niveaux (11, 12), tandis que la ou les fourches escamotables (17, 18) sont guidées en translations latérales en restant au niveau de base (12) qui est fixe.

Selon l'invention, la table de chargement (8) comporte une grille (29) et un train de rouleaux (9) destinés à supporter successivement les nouvelles couches (4) pour les placer une à une sous l'empilage (13), grille dont les couteaux (29) sont intercalés en permanence entre les rouleaux (9) et, lors du déplacement latéral de la ou des fourches (17, 18), entre les dents (19, 20) de celles-ci, la grille et le train de rouleaux étant déplaçables relativement l'un à l'autre entre deux positions extrêmes.

## Dispositif pour palettiser des charges unitaires.-

La présente invention concerne un dispositif pour palettiser des charges unitaires telles que des caisses, des cartons, des lots ficelés ou enveloppés ou autres.

Ce dispositif met en oeuvre un procédé de palettisation enseigné par le brevet français n° 1.567.169 et le brevet anglais n° 2.070.548.

Selon ce procédé, la pile de charges unitaires est montée en apportant des couches préalablement constituées, l'une après l'autre sous l'empilage des couches précédentes, chaque nouvelle couche étant amenée sous l'empilage des couches précédentes, le soutien de cet empilage est transféré sous cette nouvelle couche de base, tandis que ledit empilage est déposé sur celle-ci.

Dans une réalisation ainsi connue, le dispositif est placé en bout d'une table de préparation de chaque couche à placer sous l'empilage et comporte une table de chargement et deux fourches latérales escamotables situées respectivement au niveau de préparation d'une couche et au niveau de base de l'empilage en attente, niveaux qui sont écartés d'une distance au moins égale à la hauteur de chaque couche. La table de chargement est élévatrice entre ces deux niveaux tandis que les fourches escamotables sont guidées en translations latérales opposées en restant au niveau de base précité qui est fixe.

La manutention automatique des charges unitaires relativement à la table de chargement ne donne pas entière satisfaction, notamment du point de vue de la précision du positionnement, de la sureté de fonctionnement, de la fiabilité du matériel, de l'aptitude à une automatisation parfaite, du prix de revient ...

La présente invention a pour but de résoudre ce problème grâce à la mise au point d'un équipement original relativement simple.

Dans ce but et conformément à l'invention, la table de chargement comporte une grille et un train de rouleaux, destinés à supporter successivement les nouvelles couches pour les placer une à une sous l'empilage, grille dont les couteaux sont intercalés en permanence entre les rouleaux et lors du déplacement latéral de la ou des fourches entre les dents de celles-ci, la grille et le train de rouleaux étant déplaçables relativement l'un à l'autre entre deux positions extrêmes dans lesquelles les rouleaux font saillie de la grille et respectivement, les couteaux de cette grille font saillie des rouleaux, afin de supporter chacune des nouvelles couches considérées, tantôt par les rouleaux, tantôt par les couteaux pour que les dents de la ou des fourches puissent s'insérer entre lesdits couteaux au-dessus desdits rouleaux et en-dessous de la couche sélectionnée plaquée sous l'empilage. La table élévatrice comprend un plateau porte-couteaux et un cadre porte-rouleaux, le cadre étant relié à un dispositif de levage et le plateau étant suspendu au cadre par des leviers pivotants qui, lorsqu'ils sont libres, maintiennent plateau et cadre éloignés l'un de l'autre et, lorsqu'ils sont actionnés par des cames fixes lors de l'élévation du cadre, tendent par pivotement à rapprocher le plateau de celui-ci.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :

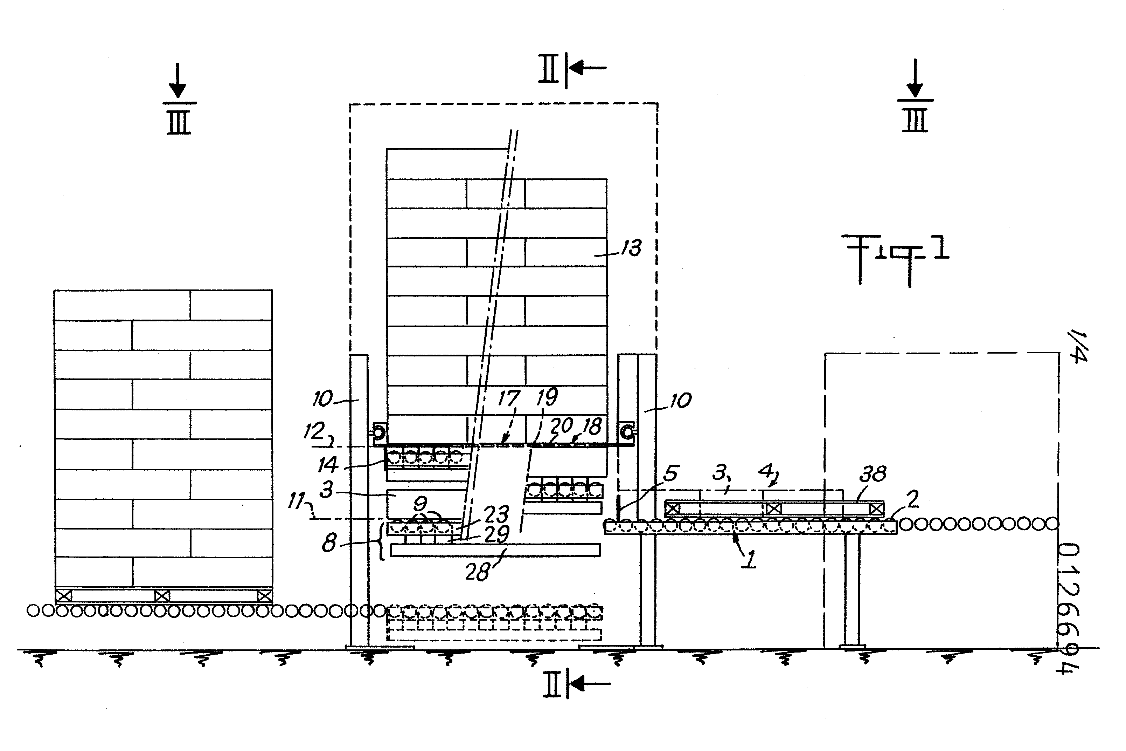

- la figure 1 est une élévation longitudinale schématique, illustrant une installation faisant application du dispositif de palettisation conforme à l'invention,

- la figure 2 est une élévation-coupe transversale également schématique, prise suivant la ligne II-II de la figure 1,

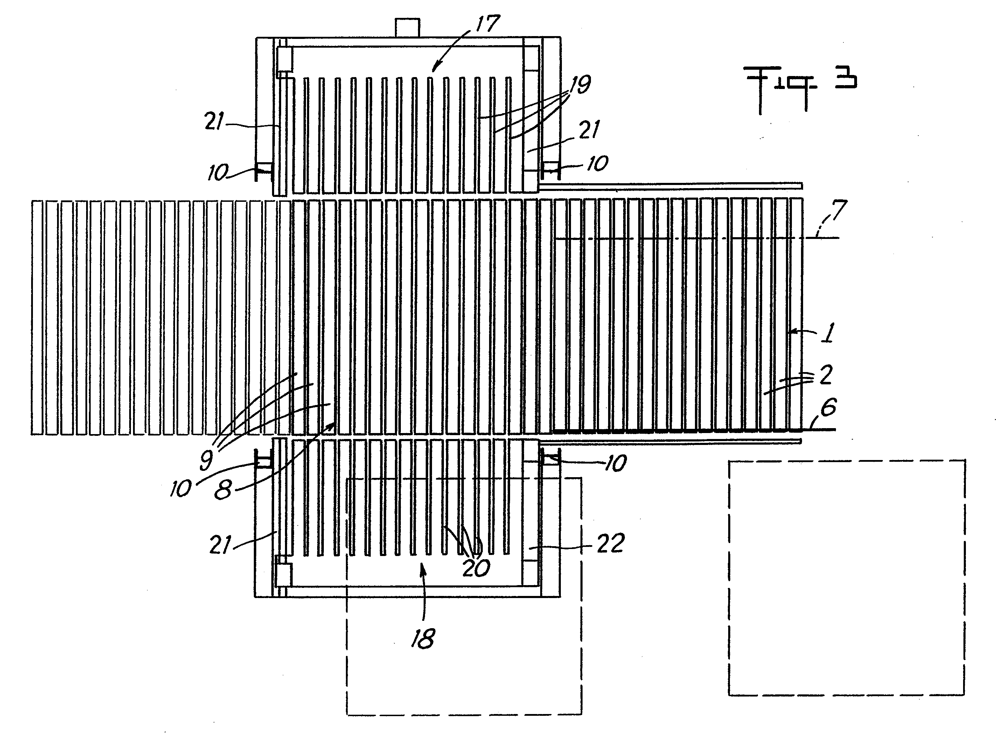

- la figure 3 est une vue en plan de dessus encore schématique, prise suivant la ligne III-III de la figure 1,

- la figure 4 est une vue analogue à la figure 1, mais à plus grande échelle montrant, uniquement les moyens de la table élévatrice prévus pour le chargement par en-dessous de l'empilage.

L'installation comporte une table de préparation 1 à rouleaux motorisés 2 sur laquelle l'opérateur pose, suivant la répartition choisie, des charges unitaires 3 afin de former une couche 4 contre une butée frontale escamotable 5, une butée latérale fixe 6 et une butée latérale règlable 7.

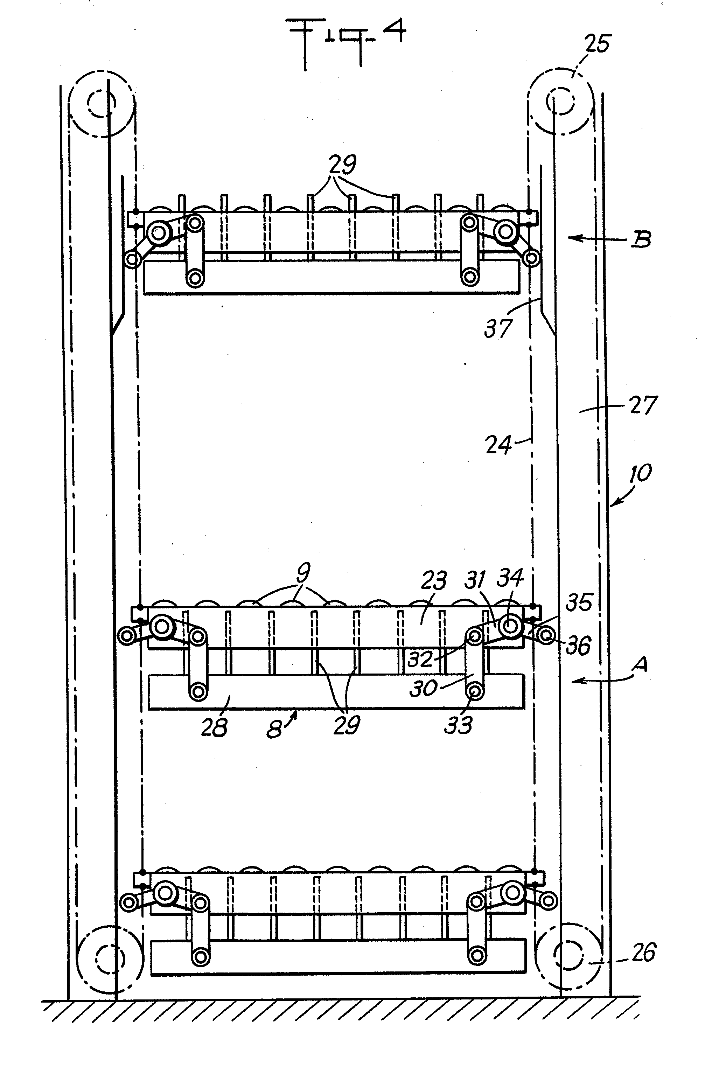

L'installation comporte également une table de chargement 8 à rouleaux 9 dont la constitution et le fonctionnement sont décrits dans ce qui suit en se référant à la figure 4. Cette table de chargement 8 est mobile dans une ossature porteuse 10 entre le niveau de préparation 11 défini par la table 8 et le niveau de base 12 de l'empilage 13 à monter par couches successives 4 de charges 3 de façon à former une pile finie. Pour positionner et taquer sur la table de chargement 8 toute couche 4 en provenance de la table de préparation 8, l'ossature 10 supporte une butée frontale fixe 14, une butée latérale fixe 15 et un presseur latéral 16.

Ces deux niveaux 11 et 12 sont distants l'un de l'autre d'au moins la hauteur maximale d'une couche 4, car il s'agit, non seulement de disposer d'une place suffisante sous le niveau fixe de base 12 de l'empilage 13 pour introduire une telle couche sur la table de chargement 8, mais également pour disposer d'une course de levage suffisante pour effectuer le transfert de ladite couche au-dessus du niveau de base de ladite pile de la manière décrite dans ce qui suit.

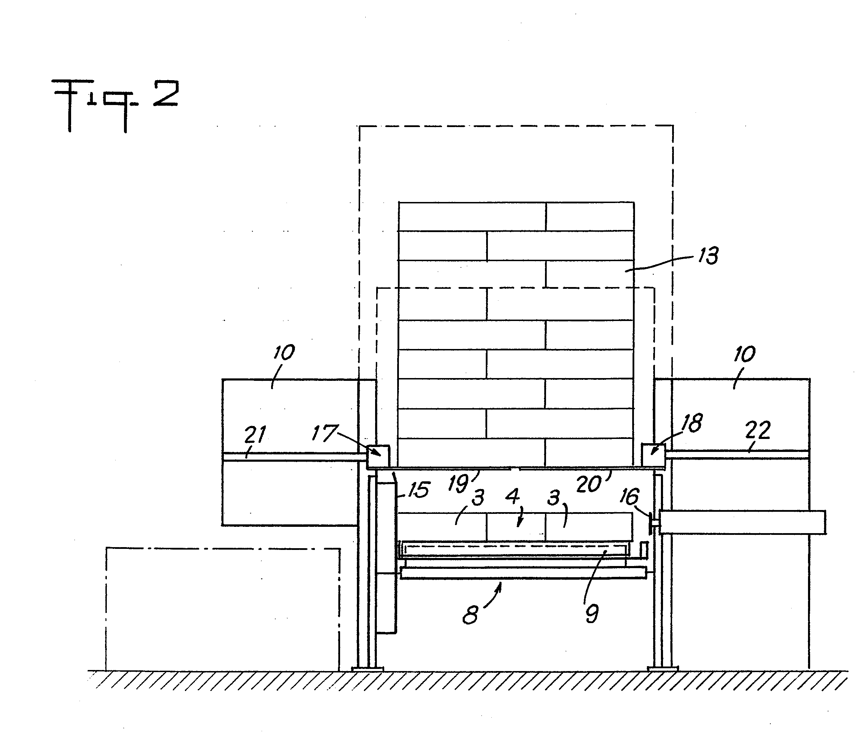

L'installation comporte enfin deux fourches latérales 17 et 18 présentant des dents 19 et 20 respectivement ; ces dents sont réparties rigoureusement comme les rouleaux 9 sur la table de chargement 8 et leur largeur est sensiblement égale au diamètre de ces rouleaux. Les fourches 17 et 18 sont guidées dans des glissières horizontales fixes 21 et 22 de l'ossature porteuse 10 et sont mues en translations opposées par des dispositifs d'actionnement non représentées. Ces translations tendent ou bien à rapprocher les dents 19 et 20 pour qu'elles se rejoignent presque sous l'empilage 13 (position illustrée en trait plein sur la figure 2), leur niveau supérieur coïncidant avec le niveau de base 12 de l'empilage 13 puisque lesdites dents sont destinées à supporter cet empilage, ou bien à éloigner lesdites dents les unes des autres pour qu'elles libèrent complètement ledit empilage.

La figure 4 montre une réalisation particulière de la table de chargement 8. Celle-ci comporte alors un cadre 23 supportant les rouleaux 9 et relié directement de façon positive à un dispositif de levage ; dans l'exemple représenté, celui-ci est constitué par des câbles sans fin 24 enroulés sur des poulies hautes 25 et basses 26 montées sur les poteaux d'angle 27 de l'ossature porteuse 10 ; de préférence, les poulies hautes 25 sont motrices et reliées par exemple à un groupe moto-réducteur non représenté par une transmission.

La table de chargement 8 comporte également un plateau 28 sur lequel sont fixés des couteaux 29 s'étendant entre les rouleaux 9 et constituant ainsi une grille susceptible de supporter, à la place du train de rouleaux 9, la couche 4 de charges 3 à transférer. Le plateau 28 est suspendu dans chaque angle au cadre 23 par deux leviers pivotants 30 et 31 articulés l'un sur l'autre autour d'un axe 32 afin de former un compas et respectivement sur le plateau 28 et le cadre 23 autour d'axes 33 et 34. Par son propre poids, le plateau 28 pend suivant la position A, étant suspendu au cadre 23 par les compas 30, 31 aplatis en angle obtus ; dans cette position A, les couteaux 29 sont escamotés sous le niveau d'appui des rouleaux 9 qui sont alors sélectionnés pour supporter la couche 4 de charges 3.

Chaque levier 31 est prolongé, au-delà de l'axe 34, par un basculeur 35 muni en bout d'un galet fou 36 coopérant pour son actionnement avec une came fixe 37 disposée en haut sous le niveau de base 12 de l'empilage 13. Lors de la montée du cadre 23, la came 37 provoque, en intervenant sur le galet 36, le pivotement du basculeur 35 (position B) dans un sens tel que le compas 31, 32 se replie sur lui-même en formant un angle aigu ;

ce repliement des compas s'accompagne du rapprochement du plateau 28 relativement au cadre 23, rapprochement au cours duquel les couteaux 29 font saillie au-dessus des rouleaux 9 et se substituent à ceux-ci pour supporter la couche 4 de charges 3 en cours d'élévation.

En fin de course de levage, la couche 4 supportée par la grille de couteaux 29 parvient au voisinage du dessous des dents 19, 20 des fourches 17, 18 soutenant l'empilage 13 ; les fourches s'escamotent alors latéralement et déposent ledit empilage sur la couche 4 considérée ; la grille de couteaux 29 supporte maintenant le nouvel empilage accru par en-dessous de cette couche en transfert ; elle poursuit sa course de levage pour amener en regard des dents 19, 20 des fourches rétractées, les espaces libres existant, en-dessous de la couche sous-jacente 4, entre les couteaux 29, au-dessus des rouleaux 9 ; elle s'immobilise et les fourches 17, 18 se rapprochent en pénétrant dans ces espaces libres ; elle redescend et le nouvel empilage se trouve supporté par les fourches ; lorsqu'elle atteint le niveau de préparation 11, elle s'immobilise et une nouvelle couche 4 préparée sur la table 1 pendant le temps masqué de l'opération de chargement ci-dessus décrite est amenée sur les rouleaux 9 de la table de chargement 8, rouleaux qui au cours de la descente sont revenus en position saillante A.

Lorsque la pile 13 est complètement montée, une palette 38 est amenée dessous par la table de chargement 8 selon le même mode opératoire.

Il est bien évident que seule la relativité du mouvement alternatif vertical est importante pour le montage par le bas de la pile 13. Ainsi, la table de chargement 8 peut être disposée à niveau fixe dans l'ossature porteuse 10 et ce sont alors les fourches de manutention 17 et 18 qui se trouvent animées de ce mouvement alternatif vertical en combinaison avec leur mouvement alternatif horizontal ; dès lors, les glissières 21 et 22 se trouvent placées sur un support guidé en translation verticale et relié à un dispositif d'actionnement alternatif.

D'autre part, dans certains cas, une seule fourche escamotable latéralement peut suffire à condition cependant que son porte-à-faux ne soit pas excessif ; des parois latérales peuvent alors être prévues pour contenir au moins la couche inférieure de l'empilage pendant l'escamotage de la fourche unique.

De plus, le mouvement relatif entre le train de rouleaux 9 et la grille 29 peut être appliqué par un dispositif moteur autonome.

Par ailleurs, la grille 29 peut être supprimée, si les charges 3 sont suffisamment rigides, pour éloigner les lignes de support. Dans ce cas, les rouleaux 9 sont davantage écartés les uns des autres pour le passage entre eux des dents 19 et 20 de la fourche de manutention.

L'invention n'est pas limitée à la forme de réalisation représentée et décrite en détail, ainsi qu'à ses variantes, car diverses modifications peuvent y être apportées sans sortir de son cadre.

REVENDICATIONS

1.- Dispositif pour palettiser des charges unitaires telles que des caisses, des cartons, des lots ficelés ou enveloppés ou autres, ce dispositif étant placé en bout d'une table de préparation (1) de chaque couche (4) à placer sous l'empilage (13) et comportant une table de chargement (8) et au moins une fourche latérale escamotable (17, 18) située respectivement au niveau de préparation (11) d'une couche et au niveau de base (12) de l'empilage en attente, niveaux qui sont écartés d'une distance au moins égale à la hauteur de chaque couche, la table de chargement (8) étant élévatrice entre ces deux niveaux (11, 12), tandis que la ou les fourches escamotables (17, 18) sont guidées en translations latérales, opposées si elles sont deux, en restant au niveau de base (12) précité qui est fixe, le dispositif considéré étant c a r a c t é r i s é en ce que la table de chargement (8) comporte une grille (29) et un train de rouleaux (9) destinés à supporter successivement les nouvelles couches (4) pour les placer une à une sous l'empilage (13), grille dont les couteaux (29) sont intercalés en permanence entre les rouleaux (9) et, lors du déplacement latéral de la ou des fourches (17, 18), entre les dents (19, 20) de celles-ci, la grille et le train de rouleaux étant déplaçables relativement l'un à l'autre entre deux positions extrêmes (A, B) dans lesquelles les rouleaux font saillie de la grille et respectivement les couteaux de cette grille font saillie des rouleaux, afin de supporter chacune des nouvelles couches considérées, tantôt par les rouleaux, tantôt par les couteaux, pour que les dents de la ou des fourches puissent s'insérer entre lesdits couteaux au-dessus desdits rouleaux et en-dessous de la couche sélectionnée plaquée sous l'empilage.

2.- Dispositif selon la revendication 1, caractérisé en ce que la table élévatrice (8) comprend un plateau (28) porte-couteaux (29) et un cadre (23) porte-rouleaux (9), le cadre (23) étant relié à un dispositif de levage (24) et le plateau (28) étant suspendu au cadre par des leviers pivotants (30, 31) qui, lorsqu'ils sont libres (A) maintiennent plateau et cadre éloignés l'un de l'autre et, lorsqu'ils sont actionnés (B) par des cames fixes (37 sur 35, 36) lors de l'élévation du cadre, tendent par pivotement à rapprocher le plateau de celui-ci.

Fig 1

Fig. 2

Fig 3

Fig. 4

# RAPPORT DE RECHERCHE EUROPEENNE

EP 84 40 1040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-4 354 786 (B.W. SPITLER) <br> * Colonne 5, ligne 12 - colonne 6, ligne 26; figures * | 1 | B 65 G 57/30 |
| Y | US-A-3 512 625 (W.S. RAYNOR) <br> * Colonne 5, ligne 49 - colonne 6, ligne 24; figures * | 1 | |
| Y | DE-A-2 224 280 (HICK & CO. GmbH) <br> * Revendications 1,2,3,6 * | 1 | |
| A | US-A-3 035 716 (LAMB) <br> * Colonne 2, ligne 57 - colonne 3, ligne 9; figures * | 1,2 | |
| A | US-A-4 199 287 (SALTS) <br> * Colonne 5, ligne 47 - colonne 6, ligne 9; figures * | 1,2 | DOMAINES TECHNIQUES RECHERCHES (Int. Cl. ³) <br><br> B 65 G |

Le présent rapport de recherche a été établi pour toutes les revendications

| Lieu de la recherche | Date d'achèvement de la recherche | Examinateur |
|---|---|---|
| LA HAYE | 10-08-1984 | VAN ROLLEGHEM F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82